# EUROPEAN PATENT SPECIFICATION

(11) **EP 1 052 167 B1**
(45) Date of publication and mention of the grant of the patent: **24.07.2002**
(21) Application number: 00201304.3
(22) Date of filing: 12.04.2000
(51) Int. Cl.: B62J 15/02, B62J 21/00

(54) **Attachment means for mounting a dressguard to a mudguard**
Vorrichtung zur Befestigung eines Kleiderschutzes an ein Schutzblech
Dispositif de fixation d'un garde-jupe à un garde-boue

(30) Priority: 13.04.1999 NL 1011785
(43) Date of publication of application: 15.11.2000
(73) Proprietor: Hesling B.V., 7071 CK Ulft (NL)
(72) Inventor: Heukshorst, Leon Nicodemus Jozephus, 7011 EN Gaanderen (NL); Kruisselbrink, Herman Jan, 7109 AE Winterswijk (NL)
(74) Representative: Van Breda, Jacobus

(56) References cited:
- DE-U- 9 013 149
- NL-A- 8 802 173

## Description

The combination of a dress-guard having a rim and an attachment means for mounting the dress-guard to a mudguard

The invention relates to the combination of a dress-guard having a rim and an attachment means for mounting the dress-guard to a mudguard.

Attachment means for mounting dress-guards to mudguards are generally known. NL-A-94.02127 discloses attachment means in which the same is formed as a visible band to be clamped over the mudguard and fed through an opening at the rim of the dress-guard. NL-A-68.05952 shows a second known embodiment of attachment means in which hooks are used which are to be attached near the rim of the dress-guard and which are to slid behind the rim of the mudguard in order to attach the dress-guard to the mudguard.

NL-A-8802173 discloses the combination of a dress-guard having a rim and an attachment means formed as a clip for mounting the dress-guard to a mudguard wherein the clip comprises a space that is at least partially enclosed by legs bending towards each other at their ends. Opposite to said space there are two further legs, also bending towards each other at their ends and defining a further space. The spaces defined by said legs are intended to clampingly receive the rim of the dress-guard and the rim of the mudguard respectively, i.e. the rims of dress-guard of mudguard are retained in separate spaces, which each follow the curvature of the dress-guard and the mudguard respectively. Mounting of the dress-guard to the mudguard is correspondingly a tedious job.

It is the object of the invention to provide a combination of a dress-guard having a rim and an attachment means that allows for a simple mounting of the dress-guard to the mudguard with the possibility of pre-mounting at the factory, and providing a firm yet detachable connection between the dress-guard and the mudguard.

To this end the combination according to the invention is characterized in that the clip comprises a single space which space is designed to clampingly receive the rim of the dress-guard and a rim of the mudguard.

The combination incorporating the attachment means according to the invention is characterized in that it is elegant, simple to mount and rust-resistant when manufactured from a suitable material such as preferably a thermoplastic plastic. This means in addition, that because it can to a large extent be mass-produced, the manufacturing costs can be kept very low.

The simplicity of mounting and optionally demounting is served, by the space being accessible via an opening defined by the ends of the legs. For the benefit of the firmness of the connection of the dress-guard to the mudguard, it is advisable that in the unmounted condition the opening is not made to be too large, while nevertheless being able to accommodate the rims of the dress-guard and the mudguard in the space defined by the legs of the attachment means.

The simplicity of mounting and demounting the combination according to the invention, and in particular also the earlier-mentioned firmness of the link between dress-guard and mudguard, are in the unmounted condition served especially by the ends of the legs being close together, and the legs being movable in relation to each other to allow widening of the opening.

In a further aspect of the invention the combination is characterized in that at least one wall defining the space is provided with a ridge, and in that a first leg's side that is directed toward the space, is substantially formed to follow the shape of the rim of the dress-guard, the end of the first leg being provided with a protuberance directed toward the space, such that the rim of the dress-guard is clampingly received in a snap connection in the space defined on the one hand by the ridge and the protuberance, and on the other hand by the first leg. This further simplifies mounting, due to the fact that sequentially first (as mentioned hereinabove: at the factory) the rim of the dress-guard is received in a well-defined position in the space of the attachment means, whereafter mounting may be completed at site by the reception of the rim of the mudguard in the said space.

For this purpose it is further desirable that at its end located near the end of the first leg, a second leg is provided with a protuberance directed toward the space, which after positioning and in cooperation with the rim of the dress-guard to be received in the space, provides an effective snap rim for clampingly receiving a rim of the mudguard in the space, the snap rim preventing the rim of the mudguard from being removed.

The invention is also embodied in a singular and separate attachment means formed as a clip for mounting a dress-guard to a mudguard, wherein the clip comprises a space that is at least partially enclosed by legs bending towards each other at their ends. According to the invention this clip has a single space which is designed to clampingly receive a rim of the dress-guard and a rim of the mudguard.

The invention will now be explained in more detail with reference to the drawing which
in Figure 1, shows a side view of the attachment means in the mounted condition together with a dress-guard and mudguard;
in Figure 2, shows a perspective view of the attachment means used in the invention;
in Figure 3, shows a perspective view of the attachment means in the vicinity of the dress-guard and the mudguard for whose connection it is intended; and
in Figure 4A to 4C, shows a cross section according to the line A-A in Figure 1 of the combination according to the invention in various stages of connecting the dress-guard and the mudguard.

Identical parts in the figures are provided with the same reference numbers.

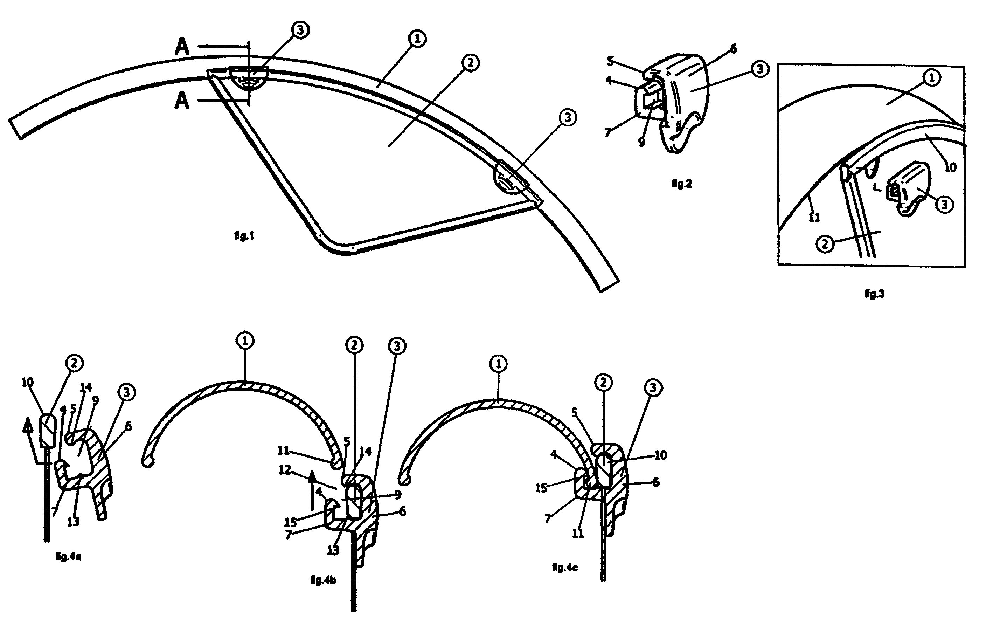

Referring first to Figure 1, a side view is shown of the attachment means 3 mounted for the attachment of a dress-guard 2 to a mudguard 1.

In Figure 2 and Figure 3, a clearer illustration of the attachment means 3 is shown in perspective, wherein Figure 3 shows the same near the mudguard 1 and the dress-guard 2, for whose connection the attachment means 3 is intended.

As shown especially clearly in Figure 2, but also in the Figures 4A to 4C, the attachment means 3 is formed as clip comprising a space 9 that is at least partially enclosed by legs 6 and 7 bending toward each other at their ends 4 and 5, which space 9 is designed to clampingly receive a rim 10 of the dress-guard 2 and a rim 11 of the mudguard 1. The space 9 is accessible via an opening 12 defined by the ends 4, 5 of the legs 6, 7. In the unmounted condition, the ends 4, 5 of the legs 6, 7 of the attachment means 3 are close together, but are movable in relation to each other to allow widening of the opening 12.

In Figure 4A can be seen that a wall at the side of the space 9 is provided with a ridge 13, and that a first leg's 6 side that is directed toward the space 9 is substantially formed to follow the rim 10 of the dress-guard 2, the end 5 of the first leg 6 being provided with a protuberance 14 directed toward the space 9 (see Fig. 4A), such that the rim 10 of the dress-guard 2 is clampingly received in a snap connection in the space 9 defined on the one hand by the ridge 13 and the protuberance 14, and on the other hand by the first leg 6. One thing and another is clearly illustrated in Figure 4B. At the end 5 located near the end 4 of the first leg 6, the second leg 7 is provided with a protuberance 15 directed toward the space 9, which after positioning and cooperation with the rim 10 of the dress-guard 2 to be received in the space 9, provides an effective snap rim for clampingly receiving a rim 10 of the mudguard 1 in the space 9, the snap rim 15 preventing the rim 11 of the mudguard 1 from being removed. Naturally, this also provides a further barrier against removal of the rim 10 of the dress-guard 1.

It will be obvious to the person skilled in the art that the preceding exemplary embodiment merely serves to explain the invention, without in any way limiting the scope of protection ensuing from the appended claims.

## Claims

1. The combination of a dress-guard (2) having a rim (10) and an attachment means formed as a clip (3) for mounting the dress-guard (2) to a mudguard (1), wherein the clip (3) comprises a space (9) that is at least partially enclosed by legs (6, 7) bending toward each other at their ends (4, 5), **characterized in that** the clip (3) has a single space (9) which is designed to clampingly receive the rim (10) of the dress-guard (2) and a rim (11) of the mudguard (1).

2. The combination according to claim 1, **characterized in that** the space (9) is accessible via an opening (12) defined by the ends (4, 5) of the legs (6, 7).

3. The combination according to claim 2, **characterized in that** in the unmounted condition the ends (4, 5) of the legs (6, 7) are close together, and the legs (6, 7) are movable in relation to each other to allow widening of the opening (12).

4. The combination according to one of the claims 1-3, **characterized in that** at least one wall defining the space is provided with a ridge (13), and **in that** a first leg's (6) side that is directed toward the space (9), is substantially formed to follow the shape of the rim (10) of the dress-guard (2), the end (5) of the first leg (6) is provided with a protuberance (14) directed toward the space (9), such that the rim (10) of the dress-guard (2) is clampingly received in a snap connection in the space (9) defined on the one hand by the ridge (13) and the protuberance (14), and on the other hand by the first leg (6).

5. The combination according to claim 4, **characterized in that** at its end (4) located near the end (5) of the first leg (6), a second leg (7) is provided with a protuberance (15) directed toward the space, which after positioning and in cooperation with the rim (10) of the dress-guard (2) to be received in the space (9), provides an effective snap rim for clampingly receiving a rim (11) of the mudguard (1) in the space (9), the snap rim (15) preventing the rim (11) of the mudguard (1) from being removed.

6. An attachment means formed as a clip (3) mounting a dress-guard (2) to a mud-guard (1), wherein the clip (3) comprises a space (9) that is at least partially enclosed by legs (6,7) bending towards each other at their ends (4,5), **characterized in that** the clip (3) has a single space (9) which is designed to clampingly receive a rim (10) of the dress-guard (2) and a rim (11) of the mudguard (1).

## Patentansprüche

1. Die Kombination eines Kleiderschutzes (2), der einen Rand (10) aufweist, und einer Befestigungseinrichtung, die als eine Klemme (3) gebildet ist, zum Montieren des Kleiderschutzes (2) an einem Schutzblech (1), wobei die Klemme (3) einen Raum (9) aufweist, der zumindest teilweise durch Schenkel (6, 7) eingeschlossen ist, die an ihren Enden (4, 5) aufeinander zu gebogen sind, **dadurch gekennzeichnet, daß** die Klemme (3) einen einzelnen Raum (9) aufweist, der entworfen ist, um den Rand (10) des Kleiderschutzes (2) und einen Rand (11) des Schutzblechs (1) festklemmend aufzunehmen.

2. Die Kombination gemäß Anspruch 1, **dadurch gekennzeichnet, daß** der Raum (9) über eine Öffnung (12) zugänglich ist, die durch die Enden (4, 5) der Schenkel (6, 7) definiert ist.

3. Die Kombination gemäß Anspruch 2, **dadurch gekennzeichnet, daß** die Enden (4, 5) der Schenkel (6, 7) in dem unmontierten Zustand nahe beieinander liegen, und daß die Schenkel (6, 7) bezüglich einander bewegbar sind, um ein Verbreitern der Öffnung (12) zu ermöglichen.

4. Die Kombination gemäß einem der Ansprüche 1 bis 3, **dadurch gekennzeichnet, daß** zumindest eine Wand, die den Raum definiert, mit einem Steg (13) versehen ist, und daß eine Seite des ersten Schenkels (6), die in Richtung des Raums (9) gerichtet ist, im wesentlichen geformt ist, um der Form des Randes (10) des Kleiderschutzes (2) zu folgen, wobei das Ende (5) des ersten Schenkels (6) mit einer Ausstülpung (14) versehen ist, die in Richtung des Raums (9) gerichtet ist, derart, daß der Rand (10) des Kleiderschutzes (2) festklemmend in einer Schnappverbindung in dem Raum (9) aufgenommen wird, der einerseits durch den Steg (13) und die Ausstülpung (14) und andererseits durch den ersten Schenkel (6) definiert ist.

5. Die Kombination gemäß Anspruch 4, **dadurch gekennzeichnet, daß** ein zweiter Schenkel (7) an seinem Ende (4), das sich nahe dem Ende (5) des ersten Schenkels (6) befindet, mit einer Ausstülpung (15) versehen ist, die in Richtung des Raums gerichtet ist, was nach einer Positionierung und in Kooperation mit dem Rand (10) des Kleiderschutzes (2), der in dem Raum (9) aufgenommen werden soll, einen wirksamen Schnapprand zum festklemmenden Aufnehmen eines Rands (11) des Schutzblechs (1) in dem Raum (9) liefert, wobei der Schnapprand (15) verhindert, daß der Rand (11) des Schutzblechs (1) entfernt wird.

6. Eine Befestigungseinrichtung, die als eine Klemme (3) gebildet ist, die einen Kleiderschutz (2) an einem Schutzblech (1) montiert, wobei die Klemme (3) einen Raum (9) aufweist, der zumindest teilweise durch Schenkel (6, 7) eingeschlossen ist, die an ihren Enden (4, 5) aufeinander zu gebogen sind, **dadurch gekennzeichnet, daß** die Klemme (3) einen einzelnen Raum (9) aufweist, der entworden ist, um einen Rand (10) des Kleiderschutzes (2) und einen Rand (11) des Schutzblechs (1) festklemmend aufzunehmen.

## Revendications

1. Ensemble constitué par un protège-vêtement (2) comportant un rebord (10) et un moyen de fixation formé en une pince (3) destinée à assurer le montage du protège-vêtement (2) sur un garde-boue (1), dans lequel la pince (3) comprend un espace (9) qui est au moins partiellement entouré par des pattes (6, 7) repliées l'une vers l'autre à leur extrémité (4, 5), **caractérisé en ce que** la pince (3) comporte un espace (9) unique qui est conçu afin de recevoir de manière à les bloquer le rebord (10) du protège-vêtement (2) et un rebord (11) du garde-boue (1).

2. Ensemble selon la revendication 1, **caractérisé en ce que** l'espace (9) est accessible par une ouverture (12) définie par les extrémités (4, 5) des pattes (6, 7).

3. Ensemble selon la revendication 2, **caractérisé en ce que**, à l'état démonté, les extrémités (4, 5) des pattes (6, 7) sont proches l'une de l'autre, et les pattes (6, 7) peuvent être déplacées l'une par rapport à l'autre afin de permettre l'élargissement de l'ouverture (12).

4. Ensemble selon l'une des revendications 1 à 3, **caractérisé en ce qu'**au moins une paroi définissant l'espace comporte une nervure (13), et **en ce qu'**un côté de la première patte (6) qui est orienté vers l'espace (9) est formé de manière à suivre sensiblement la forme du rebord (10) du protège-vêtement (2), l'extrémité (5) de la première patte (6) comporte une première protubérance (14) orientée vers l'espace (9), de telle sorte que le rebord (10) du protège-vêtement (2) est reçu de manière à être bloqué en une liaison par encliquetage dans l'espace (9) défini d'une part par la nervure (13) et la protubérance (14), et d'autre part par la première patte (6).

5. Ensemble selon la revendication 4, **caractérisé en ce qu'**à son extrémité (4) située à proximité de l'extrémité (5) de la première patte (6), une seconde patte (7) comporte une protubérance (15) orientée vers l'espace, qui, après positionnement du rebord (10) du protège-vêtement (2) destiné à être reçu dans l'espace (9) et en coopérant avec ce dernier, forme un rebord d'encliquetage efficace afin de recevoir de manière à le bloquer un rebord (11) du garde-boue (1) dans l'espace (9), le rebord d'encliquetage (15) empêchant la séparation du rebord (11) par rapport au garde-boue (1).

6. Moyen de fixation formé en une pince (3) assurant le montage d'un protège-vêtement (2) sur un garde-boue (1), dans lequel la pince (3) comprend un espace (9) qui est au moins partiellement entouré par des pattes (6, 7) repliées l'une vers l'autre à leur extrémité (4, 5), **caractérisé en ce que** la pince (3) comporte un espace (9) unique qui est conçu afin de recevoir de manière à les bloquer un rebord (10) du protège-vêtement (2) et un rebord (11) du garde-boue (1).
